# EUROPEAN PATENT APPLICATION

(11) **EP 4 586 028 A1**
(43) Date of publication of application: **16.07.2025**
(21) Application number: 24220191.1
(22) Date of filing: 16.12.2024
(51) Int. Cl.: G05B 19/4099, A61C 13/00

(54) **SYSTEM AND METHOD FOR PROCESSING DENTAL PROSTHESIS**

(30) Priority: 09.01.2024 KR 20240003522
(71) Applicant: Huvitz Co., Ltd., Anyang-si, Gyeonggi-do 14055 (KR); Ossvis Co., Ltd., Anyang-si, Gyeonggi-do 14055 (KR)
(72) Inventor: HA, Seung Suk, 14055 Anyang-si (KR); MUN, Kwang Yul, 14055 Anyang-si (KR); PARK, Do Won, 14055 Anyang-si (KR); LEE, Weon Joon, 14055 Anyang-si (KR)
(74) Representative: Henkel & Partner mbB

(57) **Abstract**

Disclosed is a system and method for processing dental prostheses that can efficiently manage multiple prostheses and multiple milling machines. The dental prosthesis processing system includes an input unit (10) into which commands for operating functions of the dental prosthesis processing system are input; a display unit (20) configured to display states of prostheses processed in the dental prosthesis processing system and milling machines (40a to 40f) used in the dental prosthesis processing system; a calculation and control unit (30) equipped with CAM software and configured to control the milling machines (40a to 40f) according to a command input of a user via the input unit (10) and fabricate a prosthesis; and two or more milling machines (40a to 40f) configured to process a workpiece into a shape of a prosthesis according to a command from the calculation and control unit (30) and transfer their own state information to the calculation and control unit (30). Here, the display unit (20) is provided with a first user interface screen (76, Export) including two or more work display units (50a to 50f) and two or more milling machine state display units (60a to 60f), and the work display units (50a to 50f) display a progress state of each prosthesis processing work, and the milling machine state display units (60a to 60f) display a work progress state of each milling machine (40a to 40f).

## Description

### CROSS-REFERENCE TO RELATED APPLICATION

This application claims benefit of priority to Korean Patent Application No. 10-2024-0003522 filed on January 09, 2024, the entire contents of which are incorporated herein by reference.

### FIELD OF THE DISCLOSURE

The present disclosure relates to a system and method for processing dental prostheses, and more particularly, to a system and method for processing dental prostheses that can efficiently manage multiple prostheses and multiple milling machines.

### BACKGROUND

Prosthetic treatment is a dental treatment method that removes a damaged portion of a tooth and restores the functionality of the tooth by attaching a dental prosthesis, i.e., an artificial tooth, to the area where the damaged portion was removed.

In order to fabricate a dental prosthesis, a three-dimensional shape of the oral structure in which the prosthesis is to be placed is obtained using a three-dimensional shape scanner or the like, and the shape of the necessary prosthesis is designed using CAD (computer-aided design). Then, a workpiece such as ceramic is processed into the shape of the prosthesis by using a milling machine operated by numerical control (NC) and computer aided manufacturing (CAM) software according to the obtained shape data of the prosthesis (see Korean Patent No. 10-1854730, Korean Patent Application Publication No. 10-2010-0003646, etc.)

In a typical dental prosthesis processing system, the CAM software usually controls only one milling machine and cannot control multiple milling machines. In addition, even when the CAM software controls multiple milling machines, the CAM software installed on one computer is executed individually in multiple windows, or even when executed in one window, it is divided into tab items, making it difficult to check the states of the multiple milling machines at the same time.

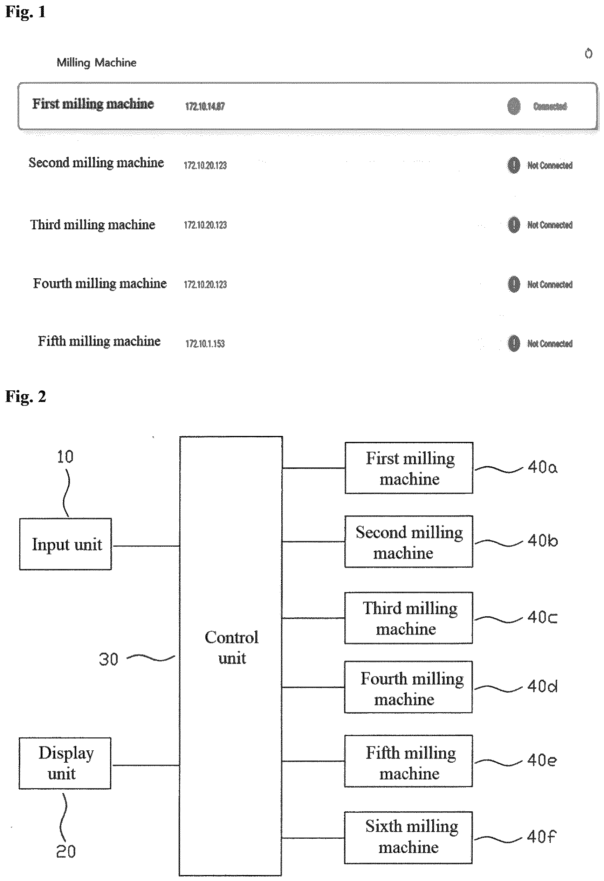

FIG. 1 is a view showing one example of a user interface screen showing the connection state between typical CAM software and multiple milling machines. As shown in FIG. 1, even when five milling machines are controlled by one CAM software, the user interface only displays the connection state between the CAM software and each milling machine as "Connected," "Not Connected," etc., resulting in a drawback of making it difficult to know the operating state of each milling machine.

In order to improve the usability of dental milling machines in dental clinics, etc., multi-machine connectivity that simultaneously controls multiple milling machines is needed. In addition, it is necessary to intuitively identify and manage the states of multiple milling machines at once in a state where the CAM software and the multiple milling machines are connected.

### [Prior Art Documents]

(Patent Document 1) Korean Patent No. 10-1854730
(Patent Document 2) Korean Patent Application Publication No. 10-2010-0003646

### SUMMARY OF THE DISCLOSURE

### TECHNICAL OBJECTS

It is an object of the present disclosure to provide a system and method for processing dental prostheses that can efficiently manage multiple prostheses and multiple milling machines.

It is another object of the present disclosure to provide a system and method for processing dental prostheses using a user interface that allows the states of multiple prostheses and multiple milling machines to be identified intuitively and allows the fabrication of multiple prostheses and the operation of multiple milling machines to be controlled efficiently.

### TECHNICAL SOLUTION

In order to achieve the above objects, the present disclosure provides a dental prosthesis processing system including an input unit 10 into which commands for operating functions of the dental prosthesis processing system are input; a display unit 20 configured to display states of prostheses processed in the dental prosthesis processing system and milling machines 40a to 40f used in the dental prosthesis processing system; a calculation and control unit 30 equipped with CAM software and configured to control the milling machines 40a to 40f according to a command input of a user via the input unit 10 and fabricate a prosthesis; and two or more milling machines 40a to 40f configured to process a workpiece into a shape of a prosthesis according to a command from the calculation and control unit 30 and transfer their own state information to the calculation and control unit 30, wherein the display unit 20 is provided with a first user interface screen 76 (Export) including two or more work display units 50a to 50f and two or more milling machine state display units 60a to 60f, and the work display units 50a to 50f display a progress state of each prosthesis processing work, and the milling machine state display units 60a to 60f display a work progress state of each milling machine 40a to 40f.

The present disclosure also provides a method of processing a dental prosthesis including: providing a first user interface screen 76 (Export) including two or more work display units 50a to 50f and two or more milling machine state display units 60a to 60f onto the display unit 20; and checking states of milling machines via the milling machine state display units 60a to 60f of the first user interface screen 76 (Export), then transferring a work for which shape editing has been completed to a milling machine capable of performing the corresponding work, and performing a processing work of a prosthesis.

### EFFECTS OF THE DISCLOSURE

According to the system and method for processing dental prostheses in accordance with the present disclosure, multiple prostheses and milling machines can be managed efficiently by using a user interface that allows the states of multiple prostheses and multiple milling machines to be identified intuitively and allows the fabrication of multiple prostheses and the operation of multiple milling machines to be controlled efficiently.

### BRIEF DESCRIPTION OF THE DRAWINGS

FIG. 1 is a view showing one example of a user interface screen showing the connection state between typical CAM software and multiple milling machines;
FIG. 2 is a diagram showing the structure of a dental prosthesis processing system in accordance with one embodiment of the present disclosure;
FIG. 3 is a view showing one example of a user interface screen that is provided on a display unit 20 of a dental prosthesis processing system in accordance with one embodiment of the present disclosure and that shows prosthesis work states and milling machine states;
FIG. 4 is a view showing one example of a user interface screen that is provided on a display unit 20 of a dental prosthesis processing system in accordance with one embodiment of the present disclosure, shows prosthesis work states, and allows editing of a prosthesis shape to be performed; and
FIG. 5 is a view showing one example of a user interface screen that is provided on a display unit 20 of a dental prosthesis processing system in accordance with one embodiment of the present disclosure, shows prosthesis work states, and allows a block selection work to be performed.

### DETAILED DESCRIPTION OF THE PREFERRED EMBODIMENTS

Hereinafter, the present disclosure will be described in detail with reference to the accompanying drawings. In the accompanying drawings, components that perform the same or similar functions are given the same reference numerals.

FIG. 2 is a diagram showing the structure of a dental prosthesis processing system in accordance with one embodiment of the present disclosure. As shown in FIG. 2, the dental prosthesis processing system in accordance with the present disclosure includes an input unit 10, a display unit 20, a calculation and control unit 30, and two or more milling machines 40a to 40f.

The input unit 10 is a device into which commands for operating the functions of the dental prosthesis processing system are input, and typical input devices such as various buttons, switches, touch panels, mice, etc., may be used to input commands.

The display unit 20 is a device that displays the states of prostheses processed by the dental prosthesis processing system and the milling machines 40a to 40f used in the dental prosthesis processing system, and a typical display device such as a liquid crystal display (LCD) panel or an organic light emitting diode (OLED) panel may be used therefor.

The calculation and control unit 30 is equipped with CAM software, controls the milling machines 40a to 40f according to a command input of a user via the input unit 10 to fabricate a prosthesis, and performs the work of designing (editing) the shape of the prosthesis into a shape desired by the user, as necessary. The calculation and control unit 30 may be a typical computer, a laptop computer, or the like equipped with CAM software.

The two or more milling machines 40a to 40f process a workpiece (hereinafter, referred to as a block as necessary) such as ceramic into the shape of a prosthesis according to a command from the calculation and control unit 30, and transfer their own state information to the calculation and control unit 30.

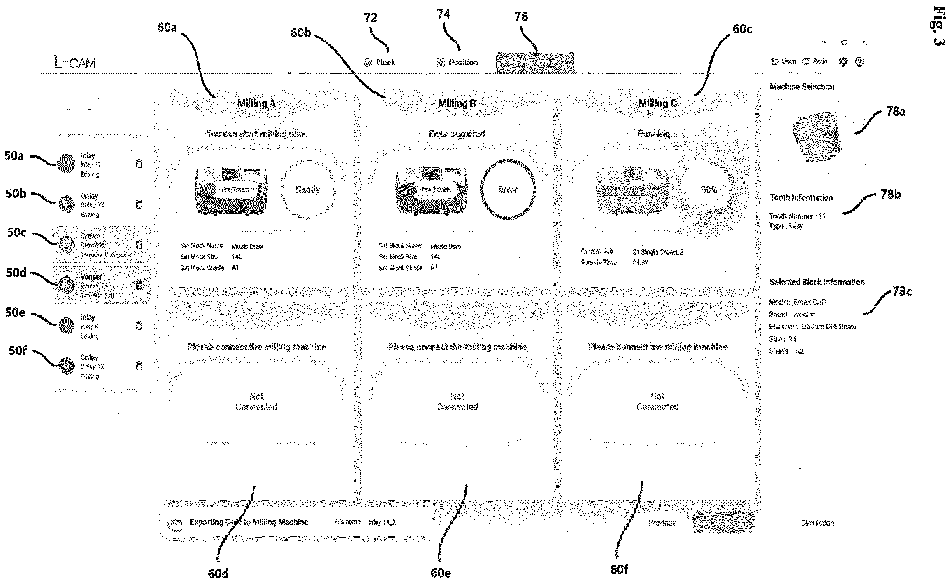

FIG. 3 is a view showing one example of a user interface screen that is provided on the display unit 20 of the dental prosthesis processing system in accordance with one embodiment of the present disclosure and that shows prosthesis work states and milling machine states. As shown in FIG. 3, a first user interface screen 76 (Export) showing the prosthesis work states and milling machine states in the dental prosthesis processing system in accordance with the present disclosure includes two or more work display units 50a to 50f and two or more milling machine state display units 60a to 60f.

The work display units 50a to 50f display the progress state of each prosthesis processing work, i.e., each prosthesis processing state. For example, in FIG. 3, work No. 11 50a is a work of fabricating an inlay prosthesis, and is currently in the process of designing (editing) the shape of the inlay prosthesis, and work No. 20 50c shows that the shape information of a crown prosthesis, whose design was completed, has been transferred to a milling machine (Transfer Complete).

The milling machine state display units 60a to 60f display the work progress states of the respective milling machines 40a to 40f. For example, in FIG. 3, the display unit 60a of the milling machine A 40a indicates that a workpiece (block) to be processed into a prosthesis is mounted on the milling machine A 40a, the position detection work (commonly referred to as "pre-touch") of the mounted workpiece has been completed, and the processing preparation is complete (Ready), the display unit 60b of the milling machine B 40b indicates that a workpiece to be processed into a prosthesis is mounted on the milling machine B 40b and an error has occurred (Error) in the stage of the position detection work (pre-touch) of the mounted workpiece, the display unit 60c of the milling machine C 40c indicates that a prosthesis processing work is currently in progress (Running) on the milling machine C 40c, and the other display units 60d, 60e, and 60f indicate that the milling machines 40d, 40e, and 40f are not connected (Not connected).

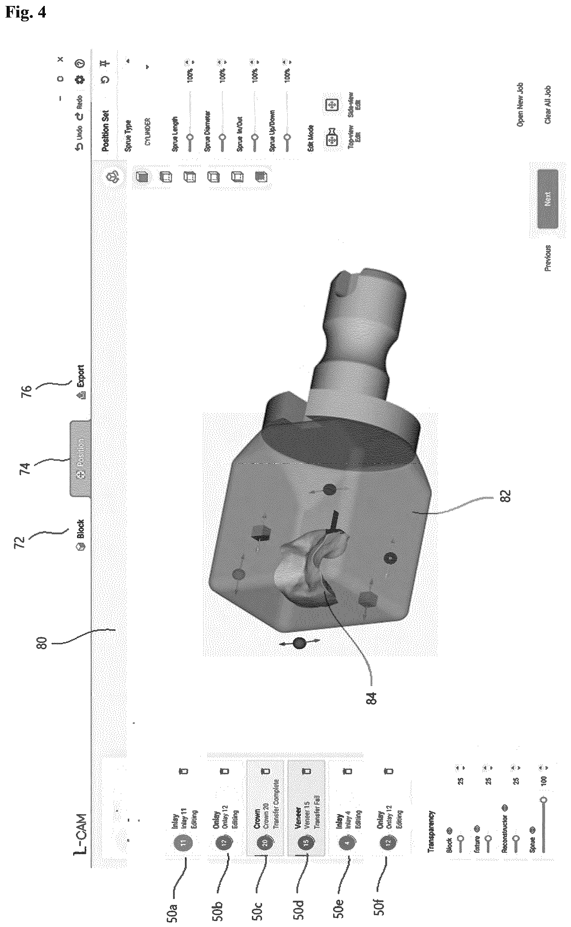

In addition, if necessary, the milling machine state display units 60a to 60f may further display information such as the equipment name, model name, equipment image, whether a detection work (pre-touch) is in progress, whether a block 82 (see FIG. 4) is mounted, the model name of the block 82 mounted on the equipment, the size of the block 82, the color of the block 82, a state message, a processing work number, a processing work progress state, and the remaining processing time for each of the milling machines 40a to 40f. Therefore, the states and device information of the multiple milling machines 40a to 40f can be checked in one place with the milling machine state display units 60a to 60f.

In addition, if necessary, the first user interface screen 76 (Export) may further include one or more work display units showing details of a work performed on the milling machine selected by the user (e.g., by clicking on one of the milling machine state display units 60a to 60f by the user), i.e., one or more of a shape display unit 78a showing the shape of a prosthesis to be processed on the selected milling machine, a processing work display unit 78b showing a prosthesis processing work number, and a block display unit 78c showing information on a workpiece (block) to be processed.

As shown in FIGS. 2 and 3, in the dental prosthesis processing system in accordance with the present disclosure, one CAM software is executed on one computer, and the processing work progress states of two or more prostheses (the progress states 50a to 50f of the six works displayed on the left side of the screen in FIG. 3) and the states of two or more milling machines 40a to 40f (the work progress states 60a to 60f of the six milling machines 40a to 40f displayed in the center of the screen in FIG. 3) can be checked intuitively at the same time in one window, i.e., one user interface screen 76 (Export). In addition, if necessary, the shape 78a of the prosthesis to be performed on each milling machine and work, the processing work number 78b, and the workpiece information 78c can be displayed on the right side of the screen 76 (Export).

According to the present disclosure, since the states of the milling machines can be checked via the milling machine state display units 60a to 60f of the first user interface screen 76 (Export), the states of the milling machines may be checked via the milling machine state display units 60a to 60f of the first user interface screen 76 (Export) and then the work for which the shape editing has been completed may be transferred to an appropriate milling machine, i.e., a milling machine capable of performing the corresponding work in the process of transferring (exporting) the work for which the shape design, i.e., shape editing has been completed (any of those displayed in the work display units 50a to 50f) to the milling machine, and thus, the processing work of the prosthesis can be performed.

In the dental prosthesis processing system in accordance with one embodiment of the present disclosure, the user can perform one prosthesis processing work, for example, the work displayed on the display unit 50c by using the milling machine displayed on the display unit 60c, while performing another work, for example, the prosthesis design, i.e., the prosthesis editing work, of the work (a standby work) displayed on the display unit 50a. In other words, multiple works can be performed.

FIG. 4 is a view showing one example of a user interface screen that is provided on the display unit 20 of the dental prosthesis processing system in accordance with one embodiment of the present disclosure, shows prosthesis work states, and allows editing of a prosthesis shape to be performed. As shown in FIG. 4, in the dental prosthesis processing system in accordance with one embodiment of the present disclosure, a second user interface screen 74 (Position) that shows the prosthesis work states and allows editing of the prosthesis shape to be performed includes two or more work display units 50a to 50f and a prosthesis shape editing unit 80.

The work display units 50a to 50f shown in FIG. 4 are the same as the work display units 50a to 50f shown in FIG. 3, and allow the progress states of the respective prosthesis processing works, for example, the progress state of the work transferred to the milling machines 40a to 40f, the state of the work in progress of editing the prosthesis shape, etc., to be checked.

The prosthesis shape editing unit 80 is a screen for editing the prosthesis shape of one work selected in the work display units 50a to 50f. The user may design the desired prosthesis shape 84 within the shape of the workpiece, i.e., the block 82, shown in the prosthesis shape editing unit 80 by using an editing function provided in the prosthesis shape editing unit 80. When the design (editing) of the desired prosthesis shape 84 is completed in the prosthesis shape editing unit 80, it may be switched to the first user interface screen 76 (Export) shown in FIG. 3, the state of the milling machine may be checked via the milling machine state display units 60a to 60f of the first user interface screen 76 (Export), then the work for which the shape editing has been completed may be transferred to an appropriate milling machine, and the processing work of the prosthesis may be performed.

In the dental prosthesis processing system in accordance with one embodiment of the present disclosure, the user can perform one prosthesis processing work, for example, the work displayed on the display unit 50c by using the milling machine displayed on the display unit 60c, while performing another work, for example, a block selection work of the work (a standby work) displayed on the display unit 50a.

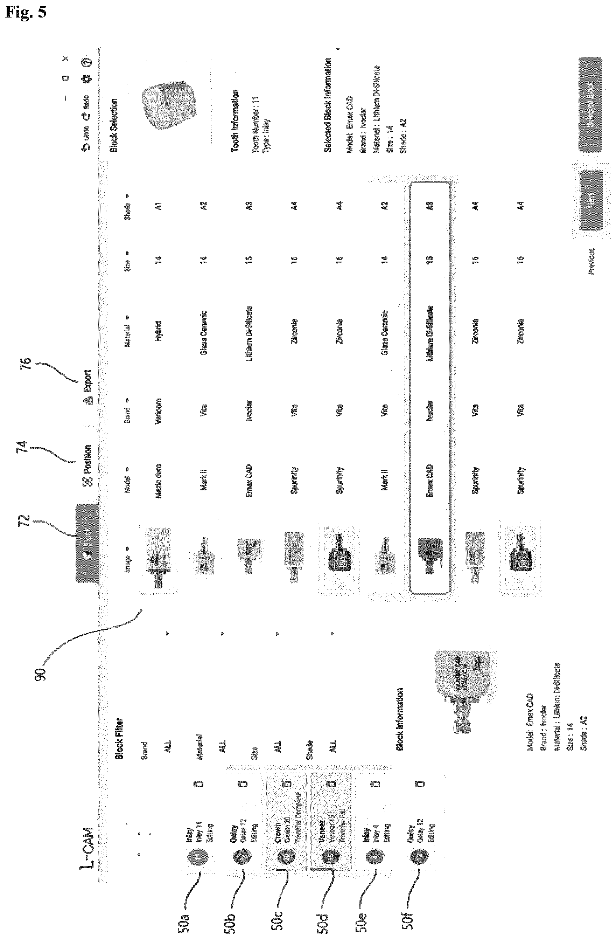

FIG. 5 is a view showing one example of a user interface screen that is provided on the display unit 20 of the dental prosthesis processing system in accordance with one embodiment of the present disclosure, shows prosthesis work states, and allows a block selection work to be performed. As shown in FIG. 5, in the dental prosthesis processing system in accordance with one embodiment of the present disclosure, a third user interface screen 72 (Block) that shows the prosthesis work states and allows a block selection work to be performed includes two or more work display units 50a to 50f and a block selection unit 90.

The work display units 50a to 50f shown in FIG. 5 are the same as the work display units 50a to 50f shown in FIG. 3, and allow the progress states of the respective prosthesis processing works, for example, the progress state of the work transferred to the milling machines 40a to 40f, the state of the work in progress of editing the prosthesis shape, etc., to be checked.

The block selection unit 90 is a screen for selecting a block to be used for one work selected in the work display units 50a to 50f. The user selects a block suitable for the selected prosthesis processing work out of multiple blocks presented in the block selection unit 90 and enters it into the corresponding prosthesis processing work. Once a suitable block is selected in this way, the selected block is mounted on the milling machine 40a to 40f manually or automatically. Here, if necessary, information on the block 82 mounted on the milling machine 40a to 40f may be checked on the user interface screen 76 (Export) showing the milling machine state.

A method of processing a dental prosthesis in accordance with the present disclosure is a method of processing a dental prosthesis using the dental prosthesis processing system, and includes providing a first user interface screen 76 (Export) including two or more work display units 50a to 50f and two or more milling machine state display units 60a to 60f onto the display unit 20; and checking the states of milling machines via the milling machine state display units 60a to 60f of the first user interface screen 76 (Export), then transferring a work for which shape editing has been completed to a milling machine capable of performing the corresponding work, and performing a processing work of a prosthesis.

Here, the method of processing may further include providing a second user interface screen 74 (Position) including two or more work display units 50a to 50f and a prosthesis shape editing unit 80 onto the display unit 20; and designing a desired prosthesis shape 84 within the shape of a workpiece shown in the prosthesis shape editing unit 80 by using an editing function provided in the prosthesis shape editing unit 80.

In addition, the method of processing may further include providing a third user interface screen 72 (Block) including two or more work display units 50a to 50f and a block selection unit 90 onto the display unit 20, and selecting a block suitable for a selected prosthesis processing work out of multiple blocks presented in the block selection unit 90 and entering it into the corresponding prosthesis processing work.

According to the present disclosure, consistent state checks are possible by providing work display units 50a to 50f to at least one, preferably two or more, and more preferably all of the three editing stages of the CAM software, i.e., the first user interface screen 76 (Export) that shows the milling machine states, the second user interface screen 74 (Position) that allows prosthesis shape editing to be performed, and the third user interface screen 72 (Block) that allows a block selection work to be performed.

According to the system and method for processing a dental prosthesis in accordance with the present disclosure, an intuitive user interface is provided that enables efficient multi-remote monitoring and control of multiple milling machines 40a to 40f by using one CAM software installed on one computer.

The present disclosure has been described above with reference to the accompanying drawings and illustrative embodiments, but the present disclosure is not limited to the contents shown in the drawings and the embodiments described above. Although reference numerals are used in the claims below for ease of understanding, the scope of the claims below is not limited to the reference numerals and the contents shown in the drawings but should be construed to encompass all modifications, equivalent configurations, and functions of the illustrative embodiments.

## Claims

1. A dental prosthesis processing system comprising:
an input unit (10) into which commands for operating functions of the dental prosthesis processing system are input;
a display unit (20) configured to display states of prostheses processed in the dental prosthesis processing system and milling machines (40a to 40f) used in the dental prosthesis processing system;
a calculation and control unit (30) equipped with CAM software, and configured to control the milling machines (40a to 40f) according to a command input of a user via the input unit (10) and fabricate a prosthesis; and
two or more milling machines (40a to 40f) configured to process a workpiece into a shape of a prosthesis according to a command from the calculation and control unit (30) and transfer their own state information to the calculation and control unit (30),
wherein the display unit (20) is provided with a first user interface screen (76, Export) comprising two or more work display units (50a to 50f) and two or more milling machine state display units (60a to 60f), and
the work display units (50a to 50f) display a progress state of each prosthesis processing work, and the milling machine state display units (60a to 60f) display a work progress state of each milling machine (40a to 40f).

2. The dental prosthesis processing system of claim 1, wherein the first user interface screen (76, Export) further comprises one or more work display units that show details of a work performed in a milling machine selected by the user.

3. The dental prosthesis processing system of claim 1, wherein the display unit (20) is further provided with a second user interface screen (74, Position) comprising two or more work display units (50a to 50f) and a prosthesis shape editing unit (80), and
the work display units (50a to 50f) display a progress state of each prosthesis processing work, and the prosthesis shape editing unit (80) provides a screen for editing a prosthesis shape of one work selected in the work display units (50a to 50f).

4. The dental prosthesis processing system of claim 1, wherein the display unit (20) is further provided with a third user interface screen (72, Block) comprising two or more work display units (50a to 50f) and a block selection unit (90), and
the work display units (50a to 50f) display a progress state of each prosthesis processing work, and the block selection unit (90) provides a screen for selecting a block to be used for one work selected in the work display units (50a to 50f).

5. A method of processing a dental prosthesis using a dental prosthesis processing system, the dental prosthesis processing system comprising:
an input unit (10) into which commands for operating functions of the dental prosthesis processing system are input;
a display unit (20) configured to display states of prostheses processed in the dental prosthesis processing system and milling machines (40a to 40f) used in the dental prosthesis processing system;
a calculation and control unit (30) equipped with CAM software, and configured to control the milling machines (40a to 40f) according to a command input of a user via the input unit (10) and fabricate a prosthesis; and
two or more milling machines (40a to 40f) configured to process a workpiece into a shape of a prosthesis according to a command from the calculation and control unit (30) and transfer their own state information to the calculation and control unit (30), and
the method comprising:
providing a first user interface screen (76, Export) comprising two or more work display units (50a to 50f) and two or more milling machine state display units (60a to 60f) onto the display unit (20), wherein the work display units (50a to 50f) display a progress state of each prosthesis processing work, and the milling machine state display units (60a to 60f) display a work progress state of each milling machine (40a to 40f); and
checking states of milling machines via the milling machine state display units (60a to 60f) of the first user interface screen (76, Export), then transferring a work for which shape editing has been completed to a milling machine capable of performing the corresponding work, and performing a processing work of a prosthesis.

6. The method of claim 5, further comprising:
providing a second user interface screen (74, Position) comprising two or more work display units (50a to 50f) and a prosthesis shape editing unit (80) onto the display unit (20), wherein the work display units (50a to 50f) display a progress state of each prosthesis processing work, and the prosthesis shape editing unit (80) provides a screen for editing a prosthesis shape of one work selected in the work display units (50a to 50f); and
designing a desired prosthesis shape (84) within a shape of a workpiece shown in the prosthesis shape editing unit (80) by using an editing function provided in the prosthesis shape editing unit (80).

7. The method of claim 5, further comprising:
providing a third user interface screen (72, Block) comprising two or more work display units (50a to 50f) and a block selection unit (90) onto the display unit (20), wherein the work display units (50a to 50f) display a progress state of each prosthesis processing work, and the block selection unit (90) provides a screen for selecting a block to be used for one work selected in the work display units (50a to 50f); and
selecting a block suitable for a selected prosthesis processing work out of multiple blocks presented in the block selection unit (90) and entering the block into the corresponding prosthesis processing work.
